Europäisches Patentamt

(19) European Patent Office

Office européen des brevets

(11) Numéro de publication : **0 155 866**
**B1**

(12) **FASCICULE DE BREVET EUROPÉEN**

(45) Date de publication du fascicule du brevet :
02.12.87

(51) Int. Cl.⁴ : **G 02 B   6/42**, G 02 B   6/28,
**H 04 B   9/00**

(21) Numéro de dépôt : **85400295.3**

(22) Date de dépôt : **19.02.85**

(54) **Coupleur optoélectronique pour fibres optiques à prélèvement réglabe et système de transmissions bidirectionnelles d'informations mettant en oeuvre un tel coupleur.**

(30) Priorité : **24.02.84 FR 8402854**

(43) Date de publication de la demande :
**25.09.85 Bulletin 85/39**

(45) Mention de la délivrance du brevet :
**02.12.87 Bulletin 87/49**

(84) Etats contractants désignés :
**DE GB IT NL SE**

(56) Documents cités :
FR-A- 2 503 360
FR-A- 2 533 323
US-A- 3 982 123
US-A- 4 103 154
US-A- 4 174 149

(73) Titulaire : **THOMSON-CSF**
**173, Boulevard Haussmann**
**F-75379 Paris Cédex 08 (FR)**

(72) Inventeur : **D'Auria, Luigi**
**THOMSON-CSF SCPI 173, bld Haussmann**
**F-75379 Paris Cedex 08 (FR)**
Inventeur : **Puech, Claude**
**THOMSON-CSF SCPI 173, bld Haussmann**
**F-75379 Paris Cedex 08 (FR)**
Inventeur : **Monronvalle, Chantal**
**THOMSON-CSF SCPI 173, bld Haussmann**
**F-75379 Paris Cedex 08 (FR)**

(74) Mandataire : **Lepercque, Jean et al**
**THOMSON-CSF SCPI 19, avenue de Messine**
**F-75008 Paris (FR)**

## Description

La présente invention se rapporte à un coupleur optoélectronique pour fibres otpiques doté de possibilités de prélèvement d'une fraction réglable de l'énergie lumineuse véhiculée par une onde guidée par ces fibres optiques, notamment pour un système de transmissions bidirectionnelles d'informations.

Ce type de coupleur est largement utilisé dans les systèmes de transmissions de données par fibres optiques. Notamment, lorsqu'il y a transmissions bidirectionnelles entre deux stations couplées par un canal de liaison à fibre optique, il est nécessaire de transmettre une onde lumineuse véhiculant des informations, d'une première station à une deuxième station par ce canal de liaison. Cette deuxième station transmet des informations en retour par une onde guidée par ce même canal. Il est alors nécessaire de prélever tout ou partie de l'énergie véhiculée par cette onde guidée.

Le taux de prélèvement doit en général être ajusté pour tenir compte de nombreux paramètres optoélectroniques associés, d'une part, aux canaux de liaisons entre stations et, d'autre part, aux stations elles-mêmes.

En outre, lorsque la configuration du système est sujette à des modifications, les réglages doivent être refaits pour tenir compte de ces modifications.

Enfin, dans certains systèmes de transmissions, les liaisons ne sont pas symétriques. C'est par exemple le cas, le plus souvent, des réseaux dits de télédistribution.

La télédistribution, largement répandue dans certains pays, va encore se développer plus rapidement dans les prochaines années. Ce développement est facilité par l'utilisation de câbles de liaisons à fibres optiques.

Dans les réseaux de télédistribution les plus simples, une station centrale transmet par un câble de liaison relié à des stations abonnées, un ou plusieurs programmes de télévision, des programmes de radiodiffusion AM/FM, ainsi qu'éventuellement des messages destinés à des abonnés particuliers. La sélection s'effectue en accordant à l'aide de filtres le récepteur dont est muni l'abonné sur une bande de fréquence déterminée, associée à un programme particulier. Dans les réseaux plus élaborés, les transmissions sont bidirectionnelles. Ces réseaux permettent, outre les facilités qui viennent d'être énumérées, le raccordement au système de télédistribution d'appareils tels que télex par exemple. L'abonné peut alors transmettre au central des ordres pour choisir un programme particulier (TV, AM/FM) qui seul lui sera transmis, émettre des ordres relatifs aux autres services disponibles ou transmettre ses propres signaux.

La transmission de signaux vidéo nécessite la mise en œuvre de liaisons à fort débit ou ce qui est équivalent à large bande passante. Il a été tout d'abord utilisé, dans le cadre de la télédistribution, des liaisons par câbles électriques, de type coaxiaux par exemple. Pour assurer un plus grand débit, il est avantageux de remplacer ces liaisons électriques par des liaisons par fibres optiques.

Par contre les signaux émis par l'abonné n'occupent généralement, pour ce type d'applications, qu'une bande de fréquences limitée.

En outre, la puissance d'émission des sources lumineuses est habituellement plus faible dans les stations abonnées qu'au central.

Il est donc nécessaire de disposer de coupleurs à taux de prélèvement réglable, l'amplitude de réglage devant en outre être importante d'après ce qui vient d'être exposé, si l'on désire, pour des raisons de standardisation et d'économie utiliser le moins possible de composants distincts.

Dans l'Art Connu, plusieurs approches de réalisation de coupleur optique à taux de prélèvement variable ont été proposées.

Une première approche a été décrite dans la demande de brevet français FR-A-2 356 171. Le dispositif comprend deux faisceaux de fibres optiques, reliées optiquement par une fibre optique unique de section sensiblement égale à la section des faisceaux, la liaison mécanique étant effectuée au moyen d'embouts femelles et mâles. La fibre unique comporte un cœur et une gaine. Une fenêtre est effectuée dans la gaine, la surface de cette fenêtre étant déterminée en fonction de la puissance optique à dériver. Une photodiode classique constituée d'une embase surmontée d'une pastille photodétectrice déterminant la surface détectrice de lumière est disposée en regard de cette fenêtre. Une goutte d'un produit de scellement est déposée sur la surface détectrice et l'ensemble est scellé à la fibre optique unique au niveau de la fenêtre effectuée dans la gaine de la fibre.

Le procédé de réalisation de cette fenêtre consiste à supprimer, par abrasion, une partie de la gaine de la fibre optique. Par frottement d'un cylindre sur la gaine, on obtient ainsi une ouverture sensiblement elliptique. La partie du cœur ainsi mise à nue est alors polie. Ainsi une fraction du rayonnement, qui arrive sur l'interface entre le cœur de la fibre et le matériau de scellement, est transmise par ce matériau à la face détectrice de la photodiode. Plus la surface de l'ouverture pratiquée dans la gaine et occupée par le matériau de scellement est grande, plus la fraction détectée du rayonnement incident est grande. Ces dispositions permettant donc un ajustement de la fraction de la puissance optique dérivée lors de la fabrication, mais ne permettent pas un réglage à proprement parler et notamment un réglage « in situ ».

Une deuxième approche a été décrite dans l'article de Gfeller et Bapst paru dans la revue « Electronics Letters » ; vol. 15, 19 juillet 1979, pages 448-450.

Il est connu que la face terminale d'une fibre optique, pour une onde guidée émergente, se comporte comme une source de lumière divergente. Du fait de la symétrie de révolution d'une fibre optique, le faisceau émis est un faisceau conique d'axe de symétrie confondu avec l'axe optique de la fibre optique, à répartition gaussienne suivant une direction radiale.

Si l'on place en vis-à-vis une seconde fibre optique, d'axe optique confondu avec celui de la première, suivant la distance séparant les faces terminales des deux fibres, une partie des rayons ont un angle d'incidence sur la face d'entrée de la seconde fibre supérieure à l'angle limite autorisant le guidage dans le cœur de celle-ci.

Selon l'article précité, il est proposé d'entourer la seconde fibre optique d'un tube guide d'onde captant les rayons s'échappant du cœur et de les guider vers l'extérieur d'un connecteur et, après réflexion sur une face externe biseautée de ce tube, enfin de les détecter à l'aide d'un photodétecteur extérieur au connecteur.

Outre le fait que la méthode adoptée conduit à une structure assez complexe, il n'est pas possible de faire varier le taux de prélèvement dans de grandes proportions et une partie de l'énergie émise par la face terminale de la première fibre optique n'est pas utilisée, c'est-à-dire ni guidée par la seconde fibre optique, ni prélevée.

L'invention vise à pallier les difficultés de l'Art Connu.

L'invention a donc pour objet un coupleur optoélectronique pour fibres optiques de type à prélèvement d'une fraction réglable d'énergie lumineuse d'une onde incidente véhiculée par une première fibre optique pour la retransmettre vers un organe optoélectronique de détection et trasmettant toute ou partie de l'énergie lumineuse restante vers une seconde fibre optique ayant des faces terminales disposées en vis-à-vis, de manière à être couplées optiquement, caractérisé en ce que l'organe optoélectronique de détection est une photodiode ayant la structure d'une pastille circulaire percée d'un canal central et enfilée sur une extrémité de la seconde fibre optique et comprenant une face active de réception annulaire disposée en regard de la face terminale de la première fibre optique en vis-à-vis de la face terminale de la seconde fibre optique ; et en ce qu'il comporte des moyens de positionnement de ces faces terminales en vis-à-vis à une distance prédéterminée l'une de l'autre, de manière à ce que le coupleur optoélectronique présente un taux de prélèvement réglable.

L'invention a encore pour objet un système de transmissions bidirectionnelles mettant en œuvre un tel coupleur.

— La figure 1 illustre schématiquement un coupleur optique à taux de prélèvement réglable selon l'invention.

— La figure 2 représente une photodiode à trou utilisée dans le cadre de l'invention.

— La figure 3 représente un exemple de réalisation concrète d'un coupleur selon l'invention.

— La figure 4 illustre schématiquement un système de transmissions bidirectionnelles de données par fibre optique mettant en œuvre des coupleurs selon l'invention.

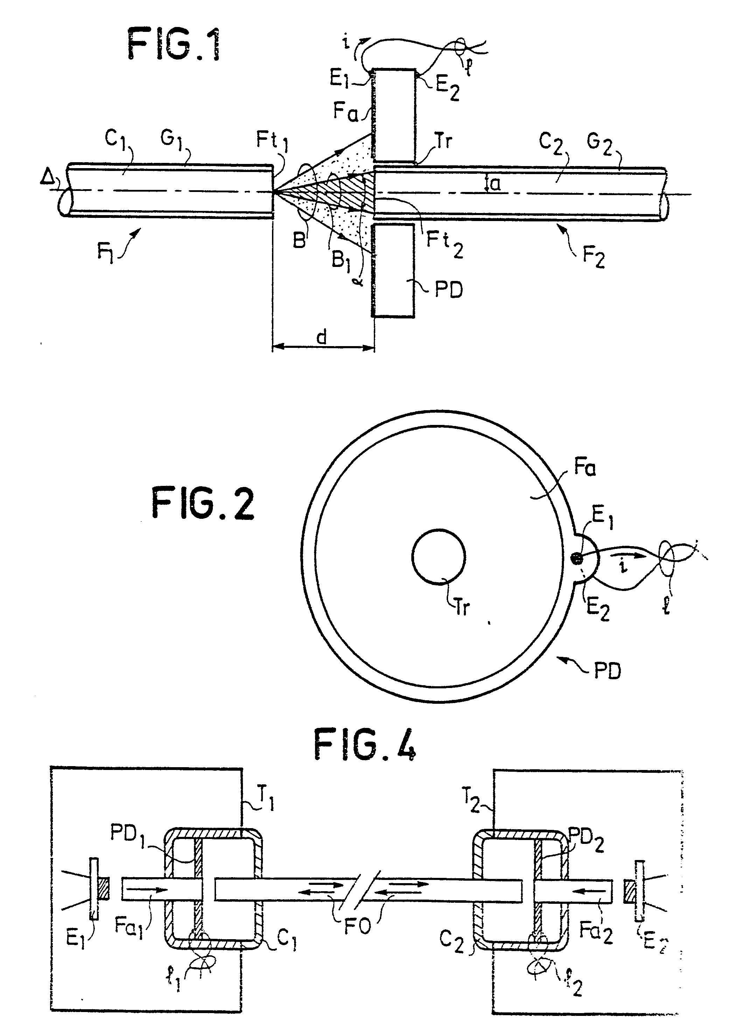

La figure 1 représente schématiquement un coupleur optique à taux de prélèvement réglable selon l'invention.

Deux fibres optiques $F_1$ et $F_2$, d'axe optique commun $\Delta$ sont séparées par une distance d réglable.

Comme il est connu et a été rappelé, la fibre optique $F_1$ dans laquelle a été injectée, et guidée par son cœur $C_1$, une onde lumineuse se comporte, par sa face terminale $Ft_1$ en regard de la face terminale $Ft_2$ de la fibre optique $F_2$, comme une source de lumière divergente. Le faisceau émis est compris dans un cône d'axe de symétrie confondu avec l'axe optique commun $\Delta$.

Selon la distance d séparant les deux faces terminales $Ft_1$ et $Ft_2$, seul un faisceau inscrit dans un cône $B_1$ d'angle du sommet $\alpha$ est un faisceau utile, c'est-à-dire capté et guidé par le cœur $C_2$ de la fibre optique $F_2$. L'angle $\alpha$ diminue lorsque la distance d augmente.

Selon la caractéristique la plus importante de l'invention, sur l'extrémité de la fibre optique $F_2$ est enfilée un élément optoélectronique de détection PD comportant, dans une zone centrale une cavité circulaire $T_r$ de même diamètre que le diamètre extérieur de la fibre optique $F_2$.

Dans une variante préférée, il s'agit d'une photodiode de structure annulaire, comme représentée, de face, sur la figure 2. Elle comporte une face active Fa ayant une forme annulaire de diamètre interne égale au diamètre extérieur de la fibre optique $F_2$.

La photodiode peut être réalisée de façon classique. Ensuite la cavité centrale peut être effectuée simplement par attaque chimique sélective de la région centrale.

La photodiode PD comporte deux électrodes $E_1$ et $E_2$ recueillant le courant i dû à la conversion de l'énergie lumineuse reçue par la face active Fa, électrodes connectées à des liaisons optiques 1.

La face active Fa reçoit l'énergie lumineuse d'un faisceau inscrit entre les enveloppes coniques $B_1$ et B. Cette énergie représente le prélèvement effectué, dont l'amplitude ou taux de prélèvement augmente lorsque la distance d augmente.

Si $P_0$ est la puissance optique issue de la face terminale active $Ft_1$ de la fibre $F_1$ et $P_c$ est la puissance optique couplée à la fibre optique $F_2$, c'est-à-dire correspondant à l'onde guidée par le cœur $C_2$ de celle-ci, la photodiode PD détecte, en l'absence de pertes, une puissance optique égale à $(PO - P_c)$.

Le taux de prélèvement, en pourcentage, peut être exprimé par la relation :

$$\tau = \frac{P_0 - P_c}{P_0} = 1 - \frac{P_c}{P_0} \tag{1}$$

3

ou encore en fonction de la distance d :

$$\tau = 1 - \left( \frac{a}{a - d \cdot \mathrm{tg}\, \theta_c} \right)^2 \qquad (2)$$

relation (2) dans laquelle a est le rayon du cœur des fibres optiques $F_1$ et $F_2$ et $\theta_c$ = arc Sin (ON) : ON étant l'ouverture numérique. Strictement, la relation (2) n'est valable que pour des fibres optiques à saut d'indice et une distribution uniforme de l'énergie dans tous les modes possibles de propagation, ainsi que si l'épaisseur de la gaine optique $G_2$ de la fibre optique $F_2$ est négligeable. La gaine $G_1$ de la fibre optique $F_1$ n'intervient pas.

Ce dernier point peut être obtenu pratiquement en procédant à une attaque chimique la région d'extrémité de la fibre optique $F_2$, région sur laquelle est enfilée la photodiode PD. Il doit être bien entendu que la face active Fa est coplanaire avec la face terminale $Ft_1$ de la fibre $F_2$ pour limiter toute cause supplémentaire de pertes.

Une méthode classique pour opérer une réduction de diamètre à l'extrémité d'une fibre optique est l'attaque de celle-ci dans une solution d'acide fluorhydrique. On utilise, par exemple, une solution à 40 % et la gaine est attaquée sur environ 1 cm de longueur. L'opération peut se faire à température ambiante. Cependant l'acide fluorhydrique attaque en priorité le cœur de la fibre.

Pour éviter l'attaque du cœur, celui-ci doit être protégé avec une cire que l'on enlève ensuite. La vitesse d'attaque de la gaine étant connue (environ 1 micromètre par minute), on peut déterminer la durée nécessaire. Par ailleurs, un contrôle permanent du diamètre peut être effectué. Une fois le diamètre recherché atteint, la fibre est rincée.

Par cette méthode, l'épaisseur de la gaine optique peut être réduite à une valeur inférieure à quelques micromètres et peut être négligée.

A titre d'exemple pour fixer les idées, pour une fibre optique $F_2$ de diamètre : 2 a = 85 micromètres et d'ouverture numérique ON = 0,2 ; le taux de prélèvement est égal à :

$$\tau = 1 - \left( \frac{42,5}{42,5 - 0,2\, d} \right)^2.$$

On peut encore exprimer la distance d en fonction du taux de prélèvement $\tau$ que l'on se fixe à l'avance :

$$d = 5(42,5 \times (1/(1 - \tau)) - 42,5) \qquad (3)$$

Pour faire varier le taux de prélèvement entre 90 % et 10 % il faut que la distance d séparant les faces terminales $Ft_1$ et $Ft_2$ variation entre, environ, 460 micromètres ($\tau$ = 90 %) et 11,5 micromètres ($\tau$ = 10 %) ; soit une variante totale d'environ 450 micromètres.

L'amplitude du courant i représente le taux de prélèvement.

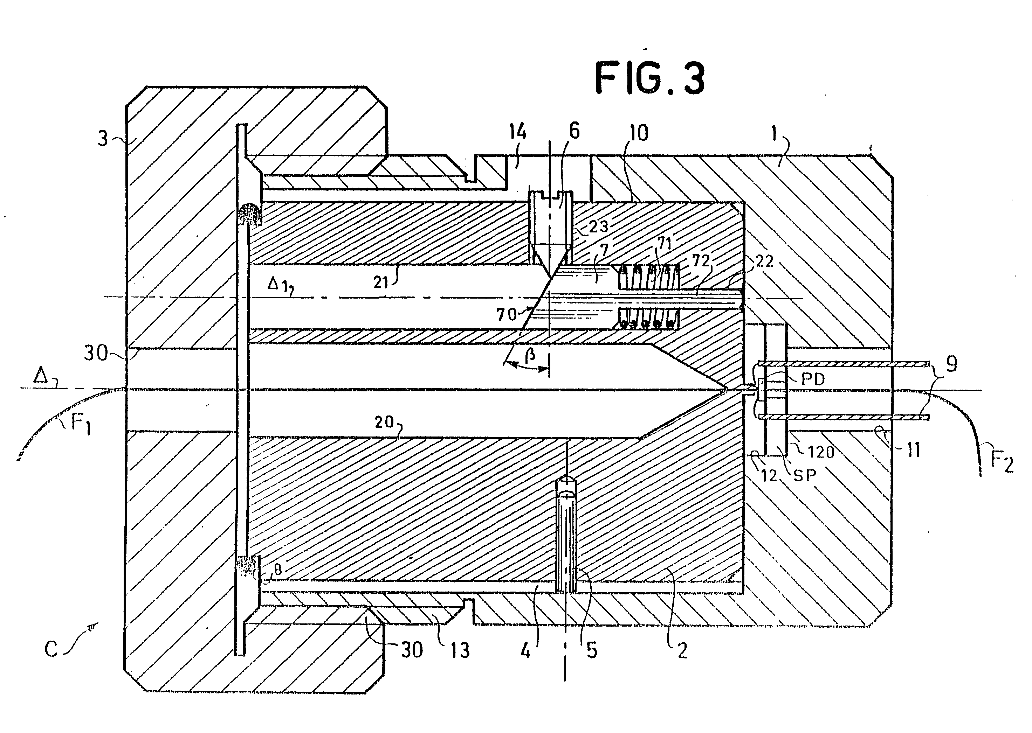

La figure 3 représente un exemple de réalisation concrète d'un coupleur optique à taux de prélèvement réglable, en vue en coupe, incorporant les dispositions de l'invention.

Les éléments identiques à ceux représentés sur la figure 1 et 2 portent les mêmes références et ne seront pas redécrits.

La fibre $F_1$ est maintenue par un manchon cylindrique 2 et suivant l'axe de symétrie de ce manchon, axe de symétrie confondu avec l'axe optique $\Delta$ commun aux deux fibres $F_1$ et $F_2$ à coupler.

Ce manchon cylindrique 2 coulisse à l'intérieur d'une pièce 1 comportant une cavité 10 à paroi intérieure également cylindrique. Les diamètres des deux pièces sont ajustés pour qu'il y ait un jeu minimum compatible avec les précisions nécessaires au couplage optique, typiquement inférieur à 5 micromètres.

Le manchon cylindrique comporte une cavité axiale 20 et la fibre optique $F_1$ n'est maintenue qu'en son extrémité en regard avec l'extrémité correspondante de la fibre $F_2$.

Cette dernière est enfilée dans la cavité centrale (Fig. 1 et 2 : $T_r$) de la photodiode PD qui est fixée à la pièce 1. A cette fin, cette pièce 1 comporte une double cavité 12-11 transperçant sa paroi formant fond et prolongeant la cavité principale 10. Le diamètre de la cavité 12 est légèrement supérieur au diamètre extérieur du disque SP de la photodiode PD, le diamètre de la cavité 11 étant inférieur à ce diamètre de manière à ce que le disque SP de la photodiode PD repose en périphérie sur le fond 120 de la cavité 12. Des conducteurs 9 reliés aux électrodes $E_1$ et $E_2$ par les liaisons $\ell$ (figures 1 et 3) permettent de transmettre le signal (i) de la photodiode PD à des circuits de traitement classiques (non représentés).

Les fibres optiques $F_1$ et $F_2$, la photodiode PD et les conducteurs électriques 9 peuvent être fixées par un scellement classique.

La pièce 1 peut être muni d'un filetage 13 sur sa paroi extérieure en son extrémité ouverte et un

**0 155 866**

capuchon 3 muni également d'un filtrage peut être vissé sur la pièce 1. Ce capuchon est percé d'une ouverture axiale 30 laissant sortir la fibre optique $F_1$.

Ce capuchon bloque le manchon 2 dans le fond de la cavité 10 par l'intermédiaire d'un joint torique élastique 8.

La paroi interne de la cavité 10 comporte une rainure longitudinale 4 dans laquelle s'engage un doigt 5 solidaire du manchon 2 et servant au guidage de celui-ci pour des mouvements de translation suivant une direction parallèle à l'axe $\Delta$. Ce doigt 5 sert également de détrompeur pour assurer des positionnements relatifs corrects du manchon 1 et du boîtier 1.

Naturellement, la précision d'usinage des pièces doit être appropriée à la précision d'alignement des fibres $F_1$ et $F_2$ exigée par l'application envisagée, typiquement inférieure à 5 micromètres.

Le manchon 2 comporte une deuxième cavité longitudinale 21 désaxée par rapport à l'axe $\Delta$ mais disposée suivant une direction $\Delta_1$, parallèle à cet axe.

Dans cette cavité se déplace un piston 7.

La cavité 21 se prolonge par une cavité supplémentaire 22 la faisant communiquer avec l'extérieur du manchon en regard avec le fond de la cavité 10 et de diamètre inférieur à celui de la cavité 21.

Le piston se prolonge également par un doigt 72 coulissant dans la cavité 22 et appuyant sur le fond de la cavité 10.

Entre le piston 7 et le fond de la cavité 21 est disposé un ressort 71 repoussant le piston.

Enfin la paroi entre l'extérieur du manchon 2 et la cavité 21 est percée d'un canal fileté 23 dans lequel est engagé une vis 23.

Un orifice supplémentaire 14 formant lumière est percé dans la paroi de la pièce 1 de manière à laisser libre accès à cette vis.

L'extrémité de la vis, de forme conique appuie sur la face 70 d'extrémité du piston 7. Celle-ci est plane et forme un biseau incliné par rapport à l'axe $\Delta$, d'un angle $\beta$ différent de $(\pi/2)$ radians.

Selon l'enfoncement, plus ou moins important de la vis 6 dans son logement 23, le piston 7 exerce également une poussée en proportion sur le fond de la cavité 10 et entraîne de ce fait le manchon en translation suivant l'axe $\Delta$, l'extrémité de la vis glissant sur la face biseautée 70 du piston.

Lorsque la vis 6 s'enfonce, le manchon s'éloigne du fond de la cavité 10 et écrase, en son autre extrémité, le joint torique élastique 8. Il en est de même des faces $Ft_1$ et $Ft_2$ des fibres $F_1$ et $F_2$. L'amplitude permise de l'écrasement doit être suffisante pour autoriser les variations du taux de prélèvement dans une gamme préétablie, comme il a été précédemment décrit.

En sens contraire, lorsque la vis 6 est ramenée vers l'extérieur, le ressort 71 repousse le manchon 2 vers le fond de la cavité 10 et les faces terminales $Ft_1$ et $Ft_2$ des fibres $F_1$ et $F_2$ se rapprochent.

Pour fixer en idées, si le mouvement de rotation de la vis 6 se traduit par un déplacement de son extrémité, suivant une direction orthogonale à l'axe $\Delta$, de 350 micromètres par tour et si l'on se fixe un déplacement du piston 7 de 10 micromètres par quart de tour de la vis 6, la face biseautée forme un angle $\beta$ par rapport à une direction orthogonale à l'axe $\Delta_1$ égal à 6,5° (0,11 radians).

La disposition adoptée, consistant en la coopération d'un moyen de vissage et du plan incliné du piston, permet .donc une bonne précision dans la définition de la distance d séparant les deux faces terminales des fibres optiques $F_1$ et $F_2$.

Dans le cadre de l'exemple précédemment défini, une amplitude de déplacement de 460 micromètres est obtenue par 11,5 tours de vis.

La photodiode PD peut être dotée typiquement des caractéristiques suivantes :
type : « PIN » silicium
diamètre extérieur (face active Fa) : 1 mm environ
sensibilité : 0,5 A/W environ à une longueur d'onde égale à 0,85 micromètre
capacité électrique : inférieure à 5 pF.

Comme il a été rappelé, le coupleur optique à taux de prélèvement réglable selon l'invention trouve une application avantageuse dans les systèmes de transmission de données de type dissymétrique.

La figure 4 illustre schématiquement un système de liaison bidirectionnelle simultanée de ce type.

Deux stations $T_1$ et $T_2$ communiquent entre elles par l'intermédiaire d'une liaison par fibre optique FO.

Chaque station comporte un émetteur de lumière, respectivement $E_1$ et $E_2$, couplé optiquement par l'intermédiaire d'une fibre optique amorce, $Fa_1$ et $Fa_2$ respectivement, à la fibre optique de liaison optique FO.

Plus précisément le couplage optique s'effectue par des coupleurs à taux de prélèvement réglable selon l'invention, coupleurs $C_1$ et $C_2$ qui constituent des connecteurs détachables.

Si l'on se rapporte à nouveau à la figure 3, pour la station $T_1$, les fibres optiques FO et $Fa_1$ (figure 4) jouent les rôles respectifs des fibres optiques $F_1$ et $F_2$, la pièce 1 pouvant être fixée au châssis de la station $T_1$.

De la même manière, pour la station $T_2$, ces rôles sont joués par les fibres optiques FO et $Fa_2$.

Dans chacun des coupleurs optiques $C_1$ et $C_2$ sont disposés, conformément à la caractéristique principale de l'invention, une photodiode, $PD_1$ et $PD_2$ respectivement, enfilée sur la fibre optique amorce, $Fa_1$ et $Fa_2$ respectivement.

Ces photodiodes $PD_1$ et $PD_2$ captent une fraction prédéterminée de la lumière générée dans la

station connectée, respectivement $T_2$ et $T_1$, selon l'ajustement effectué sur l'écart (figure 1 : d) entre les faces terminales en vis-à-vis des fibres optiques amorces, $Fa_1$ et $Fa_2$, et de la fibre optique de liaison FO.

Pour fixer les idées, les émetteurs de lumière $E_1$ et $E_2$ sont, par exemple, des diodes électroluminescentes du type « Ga As » (Arséniure de gallium) émettant sur une longueur d'onde centrée sur 0,85 micromètre.

La fibre optique FO est d'un type courant avec un diamètre de cœur de 85 micromètres et une ouverture numérique ON égale à 0,2. L'atténuation pour ce type de fibre optique est de l'ordre de 3 db/km à la longueur d'onde 0,85 micromètre.

Les photodiodes peuvent être du type rappelé précédemment en relation avec la description de la figure 3.

Dans le sens de transmission station $T_1$ à station $T_2$, ou sens « aller », la puissance optique $P_1$, issue de la source $E_1$ est couplée dans la fibre optique FO et, après passage au travers des deux coupleurs $C_1$ et $C_2$, est détectée par la photodiode $PD_2$ selon le taux $\tau_2$ de prélèvement préréglé. Cette photodiode $PD_2$ génère un courant qui obéit à la relation :

$$i_2 = A_2 \ k_2 \ P_1 \qquad\qquad (4)$$

dans laquelle, k est la sensibilité de la photodiode $PD_2$ exprimée en $AW^{-1}$ et $A_2$ est le facteur de transmission de l'ensemble qui obéit, pour sa part, à la relation suivante :

$$A_2 = (1 - \tau_1) \ \tau_2 \ A \qquad\qquad (5)$$

dans laquelle A est le facteur de transmission de la fibre optique FO et d'éventuelles connexions disposées le long de cette fibre optique, si elle n'est pas réalisée d'un seul tenant, et $\tau_1$ et $\tau_2$ les taux de prélèvement précédemment définis (relations (1) et (2)) liés aux coupleurs, $C_1$ et $C_2$ respectivement.

Dans le sens de transmission inverse ou sens « retour », les relations précédentes deviennent :

$$i_1 = A_1 \ k_1 \ P_2 \qquad\qquad (6)$$
et
$$A_2 = (1 - \tau_1) \ \tau_2 \ A \qquad\qquad (7)$$

Si l'on utilise le même type de photodiodes dans les stations $T_1$ et $T_2$, les sensibilités $k_1$ et $k_2$ peuvent être identiques ou du moins peu différentes.

Une liaison optique expérimentale de 1 km a été réalisée et les données permettant d'établir un bilan énergétique ont été relevées et rassemblées dans le tableau I disposé en fin de la présente description.

Le taux de prélèvement $\tau_1$ a été réglé à 0,1 et le taux de prélèvement $\tau_2$ a été réglé à 0,9.

Les valeurs des puissances optiques détectées par les photodiodes $PD_1$ et $PD_2$ permettent de réaliser, par exemple, une liaison vidéocommunication d'excellente qualité entre un central, station $T_1$, et un abonné, station $T_2$. La liaison retour sert dans cet exemple d'application à véhiculer des signaux numériques de type télécommande ou des signaux de service.

Cette approche est celle rencontrée classiquement dans un système de télédistribution.

Pour les discriminations entre les deux sens de transmission, on peut mettre en œuvre une discrimination par spectre de fréquences.

Pour ce faire, la lumière émise par les sources $E_1$ et $E_2$ est modulée par des signaux à transmettre. Il suffit classiquement de moduler les signaux électriques d'alimentation des diodes émettrices $E_1$ et $E_2$. Les spectres de fréquences associés aux signaux émis par les stations $T_1$ et $T_2$ doivent être, distincts. Le spectre associé aux signaux de type vidéo émis par le central station $T_1$ dans l'exemple illustré, est constitué par une large bande de fréquences, plusieurs megahertz ou dizaine de megahertz si l'on désire transmettre plusieurs canaux vidéo, alors que le spectre associé aux signaux de télécommande émis par l'abonné, station 2, est très étroit.

Les courants de sortie des photodiodes $PD_1$ et $PD_2$ sont transmis par les liaisons $l_1$ à $l_2$ à des circuits électroniques de traitement de signaux classiques (non représentés) comportant des filtres électriques.

Dans la station $T_1$ il est disposé un filtre accordé sur une bande étroite, voire sur une fréquence unique, et dans la station $T_2$, un filtre à large bande passante.

Ces dispositions sont bien connues.

D'autres types de discriminations peuvent être mis en œuvre : longueurs d'ondes différentes pour les transmissions « aller » et « retour » ou codages distincts des informations, par exemple.

## Revendications

1. Coupleur optoélectronique pour fibres optiques du type à prélèvement d'une fraction réglable d'énergie lumineuse d'une onde incidente véhiculée par une première fibre optique ($F_1$) pour la transmettre vers un organe optoélectronique de détection (PD) et transmettant toute ou partie de l'énergie lumineuse restante vers une seconde fibre optique ($F_2$), les premières ($F_1$) et seconde ($F_2$) fibres optiques ayant des faces terminales disposées en vis-à-vis de manière à être couplées optiquement, caractérisé en ce que l'organe optoélectronique de détection (PD) est une photodiode ayant la structure d'une pastille circulaire percée d'un canal central (Tr) et enfilée sur une extrémité de la seconde fibre optique ($F_2$) et comprenant une face active de réception annulaire (Fa) disposée en regard de la face terminale ($Ft_1$) de la première fibre optique ($F_1$) en vis-à-vis de la face terminale ($Ft_2$) de la seconde fibre optique ($F_2$) ; et en ce qu'il comporte des moyens de positionnement de ces faces terminales ($Ft_1$, $Ft_2$) en vis-à-vis à une distance (d) prédéterminée l'une de l'autre, de manière à ce que le coupleur optoélectronique présente un taux de prélèvement réglable.

2. Coupleur selon la revendication 1, caractérisé en ce qu'il comprend un manchon (2) en forme de cylindre maintenant la première fibre optique ($F_1$) suivant une direction confondue avec l'axe de symétrie ($\Delta$) du cylindre ; une pièce creuse (1) formant boîtier comportant une cavité interne (10) dans laquelle coulisse ce manchon (2) et un fond percé d'une suite de cavités (11 et 12) dans lesquelles sont fixées la seconde fibre optique ($F_2$) et la photodiode (PD) de manière à ce que les première ($F_1$) et seconde ($F_2$) fibres optiques présentent des axes optiques ($\Delta$) confondus dans les régions d'extrémités en vis-à-vis ; un couvercle (3) percé d'un orifice central (30) laissant libre passage à la seconde fibre optique ($F_2$) et s'adaptant sur la pièce creuse (1) formant boîtier ; des moyens élastiques (8) disposés entre le manchon (1) et le couvercle (3) ; et des moyens (6, 7, 71) de positionnements relatifs du manchon (2) et de la pièce creuse (1) formant boîtier.

3. Coupleur selon la revendication 2, caractérisé en ce que le manchon (2) est percé de première (21) et seconde (22) cavités longitudinales, disposées suivant un axe ($\Delta_1$) parallèle audit axe de symétrie ($\Delta$), la seconde cavité (22) ayant une section plus faible que la première (21), et d'une cavité radiale (23) munie d'un filetage faisant communiquer la première cavité longitudinale (21) avec la paroi extérieure du manchon (2) ; et en ce que lesdits moyens se positionnements relatifs comprennent un piston (7) prolongé par un doigt (72) de section plus faible que la section du piston, ces sections étant adaptées aux sections respectives des première (21) et seconde (22) cavité longitudinale de manière à autoriser un coulissement du piston (7) suivant ledit axe parallèle ($\Delta_1$) le piston (7) exerçant une force d'appui par l'intermédiaire du doigt (72) sur la pièce creuse (1) formant le boîtier et présentant une face terminale biseautée, un ressort (71) disposé entre le piston (7) et le fond de la première cavité longitudinale (21) repoussant le piston (7), et une vis (6) engagée dans le filetage de la cavité radiale (23) exerçant une force d'appui sur ladite face biseautée de manière à ce que les actions conjuguées de la vis et du ressort autorisent un réglage de la distance (d) séparant les faces terminales ($Ft_1$ et $Ft_2$) des première ($F_1$) et seconde ($F_2$) fibres optiques.

4. Coupleur selon les revendications 2 ou 3, caractérisé en ce que la pièce creuse (1) formant boîtier et le couvercle (3) comportent des filetages complémentaires permettant le vissage du couvercle (3) sur la pièce creuse (1) formant boîtier, cette pièce comportant en outre une lumière (14) pratiquée dans sa paroi permettant un libre accès à ladite vis (6) ; et en ce que le manchon (2) et la pièce creuse (1) formant boîtier sont munies de moyens de guidage et de détrompage constitués par un doigt (5) solidaire du manchon et d'une rainure longitudinale de guidage (4) pratiquée dans la paroi de la pièce (1) formant boîtier suivant une direction parallèle audit axe commun ($\Delta$) dans laquelle coulisse une extrémité du doigt (5).

5. Coupleur selon la revendication 2, caractérisé en ce que les moyens élastiques disposés entre le couvercle (3) et le manchon (2) sont constitués par un joint torique (8).

6. Coupleur selon l'une quelconque des revendications 1 ou 2, caractérisé en ce que la photodiode ($PD_1$, $PD_2$) comprise dans chaque coupleur ($C_1$, $C_2$) est une photodiode de type « PIN » au silicium.

7. Système de transmissions bidirectionnelles par une fibre optique de liaison (FO) assurant la transmission guidée d'énergie lumineuse entre deux stations ($T_1$, $T_2$), chaque station comprenant des moyens d'émission-réception d'énergie lumineuse ($E_1$, $E_2$), caractérisé en ce que chaque station comprend un coupleur optoélectronique ($C_1$, $C_2$) selon l'une quelconque des revendications 1 à 6 assurant le couplage optique entre les moyens d'émission-réception d'énergie lumineuse ($E_1$, $E_2$) et la fibre optique de liaison (FO), chaque coupleur prélevant un taux prédéterminé de l'énergie lumineuse reçue par la fibre optique de liaison et l'organe optoélectronique ($PD_1$, $PD_2$) de chaque coupleur ($C_1$, $C_2$) constituant les moyens de réception d'énergie lumineuse de chaque station ($T_1$, $T_2$).

8. Système selon la revendication 7, caractérisé en ce que les transmissions entre stations étant de type dissymétrique, les taux de prélèvement des deux coupleurs ($C_1$, $C_2$) sont réglés à des valeurs prédéterminées distinctes.

9. Système selon l'une quelconque des revendications 7 ou 8, caractérisé en ce que lesdits moyens d'émission d'énergie lumineuse ($E_1$, $E_2$) sont des diodes électroluminescentes du type gallium-arsenium émettant sur une longueur d'onde centrée sur 0,85 micromètre.

## Claims

1. Optoelectronic coupler for optical fibers, of the type deriving an adjustable fraction of light energy of an incident wave propagating through a first optical fiber ($F_1$) for transmission to an optoelectronic detection member (PD) and transmitting all of the remaining light energy or a portion thereof to a second optical fiber ($F_2$), the first ($F_1$) and second ($F_2$) optical fibers having end faces in facing relationship so that they are optically coupled, characterized in that the optoelectronic detection member (PD) is a

photodiode having the structure of a circular chip pierced with a central channel (Tr) and threaded on one end of the second optical fiber ($F_2$), and comprising an active annular reception face (Fa) in facing relationship to the end face ($Ft_1$) of the first optical fiber ($F_1$) in facing relationship to the end face ($Ft_2$) of the second optical fiber ($F_2$) ; and in that it comprises means adapted to position these end faces ($Ft_1$, $Ft_2$) in facing relationship at a predetermined distance (d) from each other so that the optoelectronic coupler has an adjustable deriving rate.

2. Coupler according to claim 1, characterized in that it comprises a cylindrical sleeve (2) maintaining the first optical fiber ($F_1$) along a direction identical with the axis of symmetry ($\Delta$) of the cylinder ; a hollow member (1) forming a housing and comprising an inner cavity (10) wherein this sleeve (2) slides, and a bottom pierced by a sequence of cavities (11 and 12) wherein the second optical fiber ($F_2$) and the photodiode (PD) are secured so that the first ($F_1$) and second ($F_2$) optical fibers have identidal optical axes ($\Delta$) in the facing end regions ; a cover (3) pierced by a central orifice (30) wherethrough the second optical fiber ($F_2$) is free to extend, and a fitting on the hollow member (1) forming a housing ; resilient means (8) located between the sleeve (1) and the cover (3) ; and means (6, 7, 71) providing the relative positions of the sleeve (2) and the hollow member (1) forming a housing.

3. Coupler according to claim 2, characterized in that the sleeve (2) is pierced with first (21) and second (22) longitudinal cavities located along an axis ($\Delta_1$) which is parallel to said axis of symmetry ($\Delta$), the second cavity (22) having a smaller cross-section than the first (21), and a radial cavity (23) provided with a thread and interconnecting the first longitudinal cavity (21) and the outer wall of the sleeve (2) ; and in that said means for providing the relative positions comprises a piston (7) extended by a finger (72) having a smaller cross-section than the piston, these cross-sections being adapted to the respective cross-sections of the first (21) and second (22) longitudinal cavities in a manner to permit the sliding of the piston (7) along said parallel axis ($\Delta_1$), the piston (7) urging on the hollow member (1) forming the housing through said finger (72), and having a bevelled end face, a spring (71) located between the piston (7) and the bottom of the first longitudinal cavity (21) repelling the piston (7), and a screw (6) engaged in the thread of the radial cavity (23) and urging on said bevelled face so that the combined actions of the screw and of the spring permit an adjustment of the distance (d) separating the end faces ($Ft_1$ and $Ft_2$) of the first ($F_1$) and second ($F_2$) optical fibers.

4. Coupler according to claim 2 or 3, characterized in that the hollow member (1) forming the housing and the cover (3) comprise complementary threads permitting the cover (3) to be threaded on the hollow member (1) forming the housing, this member further comprising an opening (14) in its wall permitting free access to said screw (6) ; and in that the sleeve (2) and the hollow member (1) forming the housing are provided with guiding and locating means formed by a finger (5) fast with the sleeve and a longitudinal guiding groove (4) provided in the wall of the member (1) forming the housing, along a direction parallel to said common axis ($\Delta$), wherein one end of the finger (5) slides.

5. Coupler according to claim 2, characterized in that the resilient means provided between the cover (3) and the sleeve (2) are formed by an annular seal (8).

6. Coupler according to any of claims 1 and 2, characterized in that the photodiode ($PD_1$, $PD_2$) comprised in each coupler ($C_1$, $C_2$) is a photodiode of silicon « PIN » type.

7. Bidirectional transmission system with an optical connection fiber (FO) ensuring the guided transmission of light energy between two stations ($T_1$, $T_2$), each station comprising light energy transmission-reception means ($E_1$, $E_2$), characterized in that each station comprises an optoelectronic coupler ($C_1$, $C_2$) according to any of claims 1 to 6, ensuring the optical coupling between the light energy transmission-reception means ($E_1$, $E_2$) and the optical connection fiber (FO), each coupler deriving a predetermined percentage of the light energy received through the optical connection fiber, and the optoelectronic member ($PD_1$, $PD_2$) of each coupler ($C_1$, $C_2$) forming the light energy reception means of each station ($T_1$, $T_2$).

8. System according to claim 7, characterized in that the transmissions between stations being unsymmetrical, the deriving ratios of the two couplers ($C_1$, $C_2$) are adjusted to predetermined distinct values.

9. System according to any of claims 7 and 8, characterized in that said light energy transmission means ($E_1$, $E_2$) are electro-luminescent diodes of gallium-arsenic type transmitting on a wavelength centered on 0.85 micrometer.

**Patentansprüche**

1. Optoelektronischer Koppler für optische Fasern des Typs, der einen regelbaren Bruchteil der Lichtenergie einer durch eine erste optische Faser ($F_1$) geführten, einfallenden Lichtwelle aufnimmt, um sie zu einem optoelektronischen Aufnahmeorgan (PD) zu übertragen, und der die übrig bleibende Lichtenergie ganz oder teilweise einer zweiten optischen Faser ($F_2$) zuführt, wobei die erste ($F_1$) und zweite ($F_2$) optische Faser Endseiten hat, die so gegenüberliegen, daß sie optisch gekoppelt sind, dadurch gekennzeichnet, daß das optoelektronische Aufnahmeorgan (PD) eine Fotodiode mit kreisförmiger Plättchenstruktur ist, die von einem Mittelkanal (Tr) durchbrochen und auf ein Ende der zweiten optischen Faser ($F_2$) aufgefädelt ist und eine aktive, ringförmige Aufnahmeseite (Fa) enthält, die gegenüberliegend der Endseite (Ft$_1$) der ersten optischen Faser (F$_1$) angebracht ist, die der Endseite (Ft$_2$) der zweiten optischen Faser (F$_2$) gegenüberliegt ; und daß der Koppler Mittel zum Positionieren der Endseiten (Ft$_1$, Ft$_2$) enthält, die in einem vorbestimmten Abstand (d) voneinander gegenüberliegen, so daß der optoelektronische Koppler eine regelbare Aufnahmerate aufweist.

2. Koppler nach Anspruch 1, dadurch gekennzeichnet, daß er folgende Bestandteile enthält : Eine zylinderförmige Muffe (2), die die erste optische Faser (F$_1$) in einer mit der Zylindersymmetrieachse (Δ) zusammenfallenden Richtung hält ; ein Hohlteil (1), das einen Behälter bildet und einen inneren Hohlraum (10), in das die Muffe (2) eingeschoben werden kann, und ein hinteres Teil enthält, das von einer Reihe von Hohlräumen (11 und 12) durchbrochen ist, in denen die zweite optische Faser (F$_2$) und die Fotodiode (PD) so befestigt sind, daß die erste (F$_1$) und zweite (F$_2$) optische Faser optische Achsen (Δ) aufweisen, die in den Bereichen der gegenüberliegenden Enden zusammenfallen ; einen Deckel (3), der von einer Mittelöffnung (30) durchbrochen ist und der einen Durchlaß für die zweite optische Faser (F$_2$) freiläßt und an das den Behälter bildende Hohlteil (1) angepaßt ist ; elastische Mittel (8), die zwischen der Muffe (1) und dem Deckel (3) angebracht sind ; und Mittel (6, 7, 71) zum Positionieren der Muffe (2) und des Hohlteils (1), das den Behälter bildet, zueinander.

3. Koppler nach Anspruch 2, dadurch gekennzeichnet, daß die Muffe (2) mit einem ersten (21) und einem zweiten (22) Längshohlraum, die beide entlang einer zur Symmetrieachse (Δ) parallelen Achse (Δ$_1$) angeordnet sind, wobei der zweite Hohlraum (22) einen geringeren Querschnitt als der erste (21) hat, und mit einem mit einem Gewinde versehenen radialen Hohlraum (23) durchbrochen ist, der den ersten Längshohlraum (21) mit der Außenwandseite der Muffe (2) verbindet ; und dadurch, daß die Mittel zum gegenseitigen Positionieren einen Kolben (7) aufweisen, der von einem Finger (72) mit geringerem Querschnitt als der Kolbenquerschnitt verlängert wird, wobei diese Querschnitte bezüglich der entsprechenden Querschnitte des ersten (21) und des zweiten (22) Längshohlraums so bemessen sind, daß eine Gleitbewegung des Kolbens (7) entlang der parallelen Achse (Δ$_1$) möglich ist, wobei der Kolben (7) über den Finger (72) eine Druckkraft auf das den Behälter bildende Hohlteil (1) ausübt und eine abgeschrägte Endseite aufweist, wobei eine zwischen dem Kolben (7) und dem hinteren Teil des ersten Längshohlraums (21) angebrachte Feder (71) den Kolben (7) zurückdrückt und eine im Gewinde des Radialhohlraums (23) eingebrachte Schraube (6) eine Druckkraft auf die abgeschrägte Seite so ausübt, daß die sich entsprechenden Wirkungen der Schraube und der Feder eine Einstellung des Abstands (d) ermöglichen, der die Endseiten (Ft$_1$ und Ft$_2$) der ersten (F$_1$) und der zweiten (F$_2$) optischen Faser voneinander trennt.

4. Koppler nach Anspruch 2 oder 3, dadurch gekennzeichnet, daß das den Behälter bildende Hohlteil (1) und der Deckel (3) entgegengesetzte Gewinde aufweisen, die das Aufschrauben des Deckels (3) auf das den Behälter bildende Hohlteil (1) ermöglichen, wobei dieses Teil weiterhin einen Schlitz (14) in seiner Wand enthält, der einen freien Zugang zur Schraube (6) ermöglicht ; und daß die Muffe (2) und das behälterbildende Hohlteil (1) mit Führungs- und Erkennungsmitteln ausgestattet sind, die durch einen mit der Muffe fest verbundenen Finger (5) und eine Führungs-Längsrille (4) gebildet werden, die in der Wand des den Behälter bildenden Teils (1) entlang einer zur gemeinsamen Achse (Δ) parallelen Richtung angebracht ist, und in der ein Ende des Fingers (5) gleitet.

5. Koppler nach Anspruch 2, dadurch gekennzeichnet, daß die elastischen, zwischen dem Deckel (3) und der Muffe (2) angebrachten Mittel durch eine Ringdichtung (8) gebildet sind.

6. Koppler nach einem der Ansprüche 1 oder 2, dadurch gekennzeichnet, daß die in jedem Koppler (C$_1$, C$_2$) enthaltene Fotodiode (PD$_1$, PD$_2$) eine Fotodiode vom Silizium-« PIN »-Typ ist.

7. System zur Übertragung in zwei Richtungen durch eine optische Verbindungsfaser (FO), die die geführte Übertragung von Lichtenergie zwischen zwei Stationen (T$_1$, T$_2$) gewährleistet, wobei jede Station Mittel zum Senden und Empfangen von Lichtenergie (E$_1$, E$_2$) enthält, dadurch gekennzeichnet, daß jede Station einen optoelektronischen Koppler (C$_1$, C$_2$) nach einem der Ansprüche 1 bis 6 enthält, der die optische Kopplung zwischen den Sende-Empfangsmitteln für Lichtenergie (E$_1$, E$_2$) und der optischen Verbindungsfaser (FO) gewährleistet, wobei jeder Koppler einen vorbestimmten Anteil der durch die optische Verbindungsfaser empfangenen Lichtenergie aufnimmt und das optoelektronische Organ (PD$_1$, PD$_2$) jedes Kopplers (C$_1$, C$_2$) das Empfangsmittel für Lichtenergie jeder Station (T$_1$, T$_2$) bildet.

8. System nach Anspruch 7, dadurch gekennzeichnet, daß nachdem die Übertragungen zwischen den Stationen von asymmetrischen Typ sind, die Aufnahmeanteile der beiden Koppler (C$_1$, C$_2$) auf vorbestimmte, unterschiedliche Werte geregelt werden.

9. System nach einem der Ansprüche 7 oder 8, dadurch gekennzeichnet, daß die Mittel zum Senden von Lichtenergie (E$_1$, E$_2$) elektrolumineszierende Dioden von Gallium-arsenidtyp sind, die auf einer Wellenlänge um 0,85 Mikrometer senden.

9

# FIG.1

# FIG.2

# FIG.4

# FIG.3

0 155 866